# EUROPÄISCHE PATENTSCHRIFT

(11) **EP 0 318 737 B1**
(45) Veröffentlichungstag und Bekanntmachung des Hinweises auf die Patenterteilung: **23.02.1994**
(21) Anmeldenummer: 88118728.0
(22) Anmeldetag: 10.11.1988
(51) Int. Cl.: F16K 5/06

(54) **Kugelhahn**
Spherical cock
Robinet à boisseau sphérique

(30) Priorität: 04.12.1987 DE 3741132
(43) Veröffentlichungstag der Anmeldung: 07.06.1989
(73) Patentinhaber: Feodor Burgmann Dichtungswerke GmbH & Co., D-82515 Wolfratshausen (DE)
(72) Erfinder: Zatterin, Hans-Werner, Dipl. Ing., D-8190 Wolfratshausen (DE)
(74) Vertreter: Schmidt, Horst, Dr.

(56) Entgegenhaltungen:
- EP-A- 0 027 048
- US-A- 4 258 900

## Beschreibung

Die Erfindung betrifft einen Kugelhahn gemäß Oberbegriff des Patentanspruches 1 und insbesondere einen solchen mit verbesserter Wärmebeständigkeit, so daß er in einem weiten Temperaturbereich eingesetzt werden kann. Die Erfindung betrifft ferner eine Dichtungsanordnung für einen derartigen Kugelhahn gemäß dem Oberbegriff des Patentanspruchs 9.

Bekannt sind Kugelhähne (vgl. z.B. DE-A-31 14 197), bei denen das Hauptdichtungselement durch eine Ringfeder oder dgl. gegen die Kugel gedrückt wird. Die dichtende Eingriffnahme des Hauptdichtungselementes mit der Kugel erfolgt zumeist über ein nachgiebiges Material, insbesondere ein Elastomer- oder Fluorkohlenstoffmaterial. Zur Abdichtung gegenüber dem umgebenden Gehäuse ist ferner in einer Nut im Hauptdichtungselement ein O-Ring eingelegt, der ebenfalls im allgemeinen aus einem derartigen nachgiebigen Material besteht. Infolge der Kaltsprödigkeit und des thermischen Abbaus dieser Materialien bei sehr tiefen bzw. hohen Temperaturen ist der Einsatz der bekannten Kugelhähne hinsichtlich der zulässigen Temperaturen stark eingeschränkt. Außerdem ist die Lebensdauer derartiger Materialien insbesondere in Verbindung mit dem Einsatz in aggressiven abzudichtenden Medien deutlich begrenzt. Bekannt ist zwar ferner (US-A-44 57 491), zur Erhöhung der Wärmebeständigkeit eines Kugelhahnes Dichtungsringe aus einem nachgiebigen Graphitmaterial zwischen Kugel und Gehäuse vorzusehen, doch erfordert eine derartige Anordnung wegen der geringen Abriebfestigkeit des verwendeten Graphitmaterials Schutzmaßnahmen, z.B. in Gestalt einer das Material umgebenden dünnen abriebfesten Schutzhülse. Auch ist die Kombination eines Dichtringes aus einem Fluorkohlenstoffmaterial mit einem Stützring aus Graphit bekannt (DE-A-33 36 099). Der Graphitdichtring schafft eine Notabdichtung im Falle einer Zerstörung des Kunststoffringes bei einem Brand. Wegen des Aufbaues der bekannten Dichtungsanordnungen können u.U. übermässig hohe Verstellkräfte zur Drehung der Kugel auftreten, wenn der Kugelhahn bei höheren Temperaturen eine Wärmeausdehnung erfährt. Bekannt ist es ferner (EP-A-0 027 048), bei einer Dichtungsanordnung mit einem O-Ring als Sekundärdichtungselement eine Notdichtung für den Brandfall in Gestalt eines Graphitringes vorzusehen. Der Graphitring wird im Brandfall mit einem Teil der Vorspannkraft beaufschlagt, die ein Vorspannelement in Gestalt einer Schraubenfeder direkt auf das Hauptdichtungselement ausübt. Unter normalen Betriebsverhältnissen sind sowohl der O-Ring als auch der Graphitring von der Vorspannkraft nicht beansprucht. Die thermischen Einsatzgrenzen der bekannten Dichtungsanordnung sind durch die Wärmebeständigkeit des O-Rings sowie der Schraubenfeder bestimmt und liegen daher relativ niedrig. Ein weiterer Nachteil der bekannten Dichtungsanordnung ist deren weitgehende Zerstörung unter Feuereinwirkung. Bekannt ist es schließlich (US-A 4 258 900), ein metallisches Hauptdichtungselement mittels eines Vorspannelementes aus einem Graphitmaterial vorzuspannen. Eine Abdichtung des Hauptdichtungselementes gegenüber dem Gehäuse mittels eines Sekundärdichtungselementes ist nicht vorhanden.

Der Erfindung liegt demgegenüber die Aufgabe zugrunde, einen Kugelhahn mit positiv oder schwimmend gelagerter Kugel zu schaffen, der unter Verbesserung des allgemeinen Betriebsverhaltens und der Lebensdauer einen Einsatz von sehr tiefen bis sehr hohen Temperaturen erlaubt.

Diese Aufgabe wird erfindungsgemäss durch die Merkmale im kennzeichnenden Teil des Patentanspruches 1 gelöst. Danach wird die Federeigenschaft von partikulärem Kohlenstoff, insbesondere verpresstem Graphit, zur Bildung eines hochwärme- und mediumbeständigen Vorspannelementes ausgenutzt, um ein Hauptdichtungselement in dichtendem Eingriff mit der Kugel zu drücken. Wegen der günstigen Federkennlinie dieses Kohlenstoffmaterials können mit relativ klein bemessenen Vorspannelementen hohe Vorspannkräfte aufgebracht werden, was eine Metall-auf-Metallabdichtung zwischen Kugel und Hauptdichtungselement mit ausreichender Dichtwirkung ermöglicht. Die Kraft des Vorspannelementes wirkt erfindungsgemäss nicht direkt, sondern über ein Sekundärdichtungselement auf das Hauptdichtungselement. Dieses Sekundärdichtungselement besteht ebenfalls aus dem Kohlenstoffmaterial, welches sich ferner durch ein günstiges Dichtungsverhalten auszeichnet, und übernimmt die Funktion der bislang zu diesem Zweck verwendeten O-Ringe. Das Sekundärdichtungselement ist zwar den gleichen oder annähernd gleichen Kräften wie das Vorspannelement ausgesetzt, doch nur auf seine Dichtfunktion hin dimensioniert. Wegen der Trennung der Vorspann- von der Dichtungsfunktion bei der erfindungsgemäßen Dichtungsanordnung können die betreffenden Bauteile unter optimaler Ausnutzung der Feder- bzw. Dichtungseigenschaften des verwendeten Kohlenstoffmaterials ausgelegt werden. Dies bedeutet, daß das Vorspannelement so ausgebildet werden kann, daß die Vorspannkraft an einer Stelle der Federkennlinie zu liegen kommt, die in ausreichendem Abstand von einer oberen Belastungsgrenze liegt, so daß sichergestellt ist, daß thermisch bedingte Ausdehnungen der Bauteile federnd abgefangen werden können, ohne daß es zu einem Verklemmen und damit zu extrem hohen Kugelverstellkräften kommen kann. Umgekehrt kann das Sekundärdichtungselement optimal auf seine Dichtungsfunktion dimensioniert werden, was bedeutet, daß dieses Element unter den einwirkenden Kräften eine ausreichende Verformung erfährt, d.h. ggf. bis an die Grenze seines elastischen Bereiches beansprucht werden kann. Da die Dichtungsanordnung nur aus temperaturbeständigen Materialien bestehen kann, ist ein Einsatz des Kugelhahnes in einem sehr weiten Temperaturbereich von z. B. -200°C bis + 550°C möglich. Die Erfindung ermöglicht insbesondere auch die Schaffung einer eintrittsseitigen Dichtungsanordnung mit hoher Betriebszuverlässigkeit für Kugelhähne mit positiv gelagerter Kugel.

Nach einer bevorzugten Weiterbildung der Erfindung kann zwischen Vorspann- und Sekundärdichtungselement ein Kraftübertragungselement angeordnet sein. Dem Kraftübertragungselemenet kann außer der Weiterleitung der Vorspannkraft vom Vorspann- auf das Sekundärdichtungselement die Funktion zukommen, gemäß der Weiterbildung nach Unteranspruch 6 eine Begrenzung der Federwege dieser Elemente und damit einen Überlastschutz zu schaffen. Die zwischen Kraftübertragungselement und Hauptdichtungselement einerseits bzw. Gehäuse und Kraftübertragungselemnet anderseits gebildeten Funktionsspalte sind als weiterer Vorteil der erfindungsgemäßen Ausgestaltung der Dichtungsanordnung gegenüber der Außenumgebung im wesentlichen abgeschirmt, wodurch wirksam verhindert wird, daß Fremdkörper in diese Spalte eindringen können. Bezüglich anderer Weiterbildungen der Erfindung wird auf die restlichen Unteransprüche verwiesen.

Durch die Erfindung ist ferner eine Dichtungsanordnung zur Verwendung in einem Kugelhahn, bestehend aus einem vorspannbaren metallischen Hauptdichtungselement und einem davon gehaltenen Sekundärdichtungselement, geschaffen, das durch die Merkmale des Patentanspruches 9 gekennzeichnet ist.

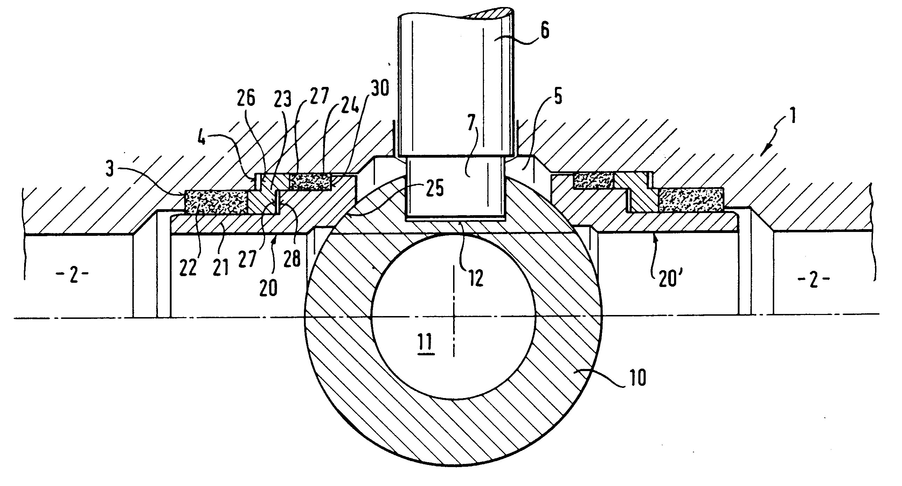

Die Erfindung wird nachfolgend anhand einer bevorzugten Ausführungsform und der Zeichnung, die einen fragmentarischen schematischen Längsschnitt durch einen erfindungsgemäß aufgebauten Kugelhahn zeigt, näher erläutert.

Der Kugelhahn umfaßt, wie dargestellt, ein kompaktes (oder, wenn erwünscht, geteiltes) Gehäuse 1, welches von einer Duchgangsbohrung oder -passage 2 durchsetzt ist. Endseitig der Durchgangspassage 2 können am Gehäuse 1 nicht gezeigte Befestigungsflansche oder andere Montageeinrichtungen zur Verbindung des Kugelhahns mit einer Rohrleitung vorgesehen sein.

Die Durchgangspassage 2 erweitert sich von äußeren Bereichen mit Nennabmessung nach innen unter Bildung zwischenliegender abgestufter Bereiche zu einem zentralen Bereich oder einer Kammer 5, in der eine Kugel 10 mit einer bei 11 angedeuteten Durchbohrung aufgenommen ist. Die Kugel 10 hat eine äußere Ausnehmung 12, welche einen Zapfen 7 am unteren Ende einer in einer Bohrung im Gehäuse 1 gelagerten Betätigungswelle 6 aufnimmt, mit deren Hilfe die Kugel um eine Achse senkrecht zur Längsachse der Durchgangspassage 2 von Hand oder maschinell gedreht werden kann, um die Durchbohrung 11 der Kugel 10 in und aus einer ausgerichteten Beziehung zur Durchgangspassage 2 zu bringen. Die Betätigungswelle 6 kann in bekannter Weise gegenüber dem Gehäuse 1 abgedichtet und an der Außenseite des Gehäuses mit nicht gezeigten Betätigungsorganen versehen sein. Die Kugel 10 kann ferner an einer der Ausnehmung 12 diametral gegenüberliegenden Stelle eine weitere Ausnehmung (nicht gezeigt) zur Aufnahme eines im Gehäuse 1 gehaltenen Lagerzapfens (ebenfalls nicht gezeigt) ähnlich dem Zapfen 7 der Betätigungswelle 6 aufweisen, was eine positive Lagerung der Kugel 10 im Gehäuse 1 ergibt, so daß diese unter den auf sie einwirkenden Mediumdrücken nur im Rahmen des Lagerspieles eine axilale Bewegung relativ zum Gehäuse 1 bzw. zur Durchgangspassage 2 vornehmen kann. Der vorbeschriebene Aufbau des Kugelhahnes ist grundsätzlich bekannt, so daß auf eine detaillierte Beschreibung verzichtet werden kann.

Wie dargestellt, ist die Kugel 10 gegenüber dem Gehäuse anstromseitig durch eine Dichtungsanordnung mit einem erfindungsgemäßen Aufbau abgedichtet, die das allgemeine Bezugszeichen 20 trägt. Eine weitere ebensolche Dichtungsanordnung 20′ ist an der Abstromseite der Kugel 10 vorgesehen, so daß im folgenden nur eine der Dichtungsanordnungen 20, 20′ (in der Zeichnung die linke) näher beschrieben wird. Es versteht sich jedoch, daß auch andere Kombinationen von Dichtungsanordnungen im Rahmen der Erfindung vorgesehen werden können, z.B. kann eine erfindungsgemäße Dichtungsanordnung 20 (20′) nur an der Anstrom- oder Abstromseite der Kugel 10 mit einer anderen geeigneten Dichtungseinrichtung an der betreffenden anderen Kugelseite kombiniert werden.

Die Dichtungsanordnung 20 umfaßt, wie dargestellt, ein ringförmiges Hauptdichtungselement 21 mit einer endseitigen Dichtfläche 25, die in dichtendem Eingriff mit der äußeren Oberfläche der Kugel 10 steht. Das Hauptdichtungselement 21 besteht aus einem wärmebeständigen Material, bei dem es sich vorzugsweise um ein Metall wie Stahl handelt, doch können auch andere geeignete metallische oder nicht metallische Werkstoffe verwendet werden. Ferner ist vorzugsweise wenigstens die Dichtfläche 25 des Haupdichtungselementes 21 gehärtet. Zwischen Kugel 10 und Hauptdichtungselement 21 besteht daher eine Metall-auf-Metallberührung.

Das Hauptdichtungselement 21 ist im wesentlichen axial gegen die Kugel 10 mit einer bestimmten Vorspannkraft vorgespannt und ferner gegenüber dem Gehäuse 1 abgedichtet. Zu diesem Zweck ist auf dem äußeren Umfang eines in der Zeichnung linksseitigen bzw. kugelabgewandten rohrförmigen Abschnitts des Hauptdichtungselementes 21 ein im wesentlichen ringförmiges federndes Vorspannelement 22 aufgesetzt, das sich mit einer seiner axialen Stirnflächen an einer Absatzfläche 3 eines äußeren abgestuften Bereiches der Durchgangspassage 2 abstützt. An seiner anderen gegenüberliegenden Stirnfläche liegt das Vorspannelement 22 an einer der in entgegengesetzten Richtungen weisenden Anlageflächen eines das Hauptdichtungselement 21 außen umgebenden ringförmigen Kraftübertragungselementes 23 mit Z-förmigem Querschnitt an.

Mit der anderen Anlagefläche des Kraftübertragungselementes 23 steht eine der gegenüberliegenden Stirnflächen eines auf einen kugelnahen Umfangsbereich des Hauptdichtungselementes 21 aufgesetzten Sekundärdichtungselementes 24 in Eingriff. Die andere Stirnfläche des Sekundärdichtungselement 24 stützt sich an einer kugelnahen Absatzfläche 30 des Hauptdichtungselementes 21 ab.

Das Sekundärdichtungselement 24 ist radial zwischen benachbarten Umfangsflächenbereichen des Hauptdichtungselementes 21 und der Durchgangspassage 2 eingeschlossen und kann das Hauptdichtungselement 21 gegenüber dem Gehäuse 1 abdichten, wenn es unter der Wirkung einer axialen Druckvorspannkraft zusammengedrückt wird. Darauf hinzuweisen ist ferner, daß die in Eingriff mit dem Sekundärdichtungselement 24 stehenden umfänglichen Flächenbereiche des Hauptdichtungselementes 21 und Gehäuses 1 eine minimale Rauhigkeit aufweisen sollten, damit das Sekundärdichtungselement 24 an einer Bewegung relativ zu diesen Flächen nicht wesentlich gehindert ist. Dabei wird die Beweglichkeit des Sekundärdichtungselementes 24 durch die gute Gleiteigenschaft des dafür verwendeten Materials begünstigt, worauf nachfolgend noch näher eingegangen wird.

Das zwischen Vorspannelement 22 und Sekundärdichtungselement 24 angeordnete Kraftübertragungselement 23 kann unter normalen Betriebsbedingungen sowohl relativ zum Hauptdichtungsring 21 als auch Gehäuse 1 innerhalb bestimmter Grenzen axial bewegt werden, so daß eine vom Vorspannelement 22 aufgebrachte Vorspannkraft über das Kraftübertragungselement 23 auf das Sekundärdichtungselement 24 und von dort auf das Hauptdichtungselement 21 übertragen wird. Das Sekundärdichtungselement 24 ist daher im wesentlichen den gleichen Kräften wie das Vorspannelement 22 bzw. Hauptdichtungselement 21 ausgesetzt, wenn man von einem geringen durch die Reibung des Sekundärdichtungselementes 24 mit den umgebenden Wandflächen bedingten Kraftnebenschluß absieht.

Erfindungsgemäß bestehen das Vorspannelement 22 als auch das Sekundärdichtungselement 24 aus einem Kohlenstoffmaterial mit Federeigenschaft. Insbesondere handelt es sich bei diesem Material um verpreßtes Graphit bzw. Reingraphit, das sich gleichzeitig durch eine hohe Temperatur- und Chemikalienbeständigkeit, gute Gleiteigenschaften und ein infolge einer begrenzten Kompressibilität des Materials elastisches federähnliches Kraft/Verformungsverhalten auszeichnet, wenn bestimmte von der Dichte des Materials abhängige Belastungsgrenzwerte nicht überschritten werden. Dichtungselemente aus derartigem Material sind an sich bekannt und z. B. unter dem Handelsnamen "Statotherm" von der Anmelderin der vorliegenden Anmeldung erhältlich.

Die steilere Federkennlinie von verpreßtem Graphit im Vergleich mit herkömmlichen Federelementen bedingt, daß eine zur Erzielung einer ausreichenden Dichtfunktion notwendige Verformung eines Dichtungselementes aus solchem Material Flächenpressungen voraussetzt, bei denen das Material ggf. bis nahe seiner Federkennlinie beansprucht wird, was zu übermäßigen Verstellkräften zur Drehung der Kugel 10 führen kann. Dagegen würde es für die Erzielung der gewünschten Vorspannwirkung und für eine gute Funktion als Feder ausreichen bzw. erwünscht sein, wenn die Materialbeanspruchung unter Nennbelastung im unteren bis mittleren Bereich der Federkennlinie liegt.

Diesen Anforderungen wird dadurch Rechnung getragen, daß, wie erwähnt, bei der erfindungsgemäßen Dichtungsanordnung 20 die Vorspann- und Dichtungsfunktion voneinander getrennt sind, indem das Vorspannelement 22 und das Sekundärdichtungselement 24, welche im Einsatz gleichen oder im wesentlichen gleichen Kräften ausgesetzt sind, unterschiedliche Funktionen haben und deshalb hinsichtlich der ihnen zugedachten Funktionen optimiert werden können. In Bezug auf das Vorspannelement 22 folgt daraus, daß dieses auf ein Kraft/Flächenverhältnis dimensioniert werden kann, bei dem die gewünschte vom Element aufzubringende Vorspannkraft an einer sicheren, d.h. unteren bis mittleren Stelle innerhalb der materialspezifischen Federkennlinie liegt. Das Sekundärdichtungselement 24 wird dagegen im wesentlichen auf seine Dichtfunktion optimiert, was bedeutet, daß es unter den einwirkenden Vorspannkräften um einen ggf. bis an die Grenze seiner Federbelastbarkeit reichenden Betrag axial gestaucht werden kann, damit seine Umfangsflächen in einen ausreichenden medium-dichten Eingriff mit den benachbarten Flächen des Hauptdichtungselementes 21 bzw. Gehäuses 1 gedrückt werden.

Die bei der Dimensionierung und gegenseitigen Abstimmung des Vorspannelementes und Sekundärdichtungselementes hauptsächlich zu berücksichtigenden Parameter sind die Querschnitts- und Längenabmessungen dieser Elemente. Bei geeigneter gegenseitiger Abstimmung dieser Parameter sind ein ausreichender axialer Federweg des Vorspannelementes 22 als auch des Sekundärdichtungselementes 24 und gleichzeitig eine Beanspruchung des Materials in den genannten gewünschten Bereichen der Federkennlinie gewährleistet.

In der Zeichnung ist ferner zu erkennen, daß das Kraftübertragungselement 23 eine im wesentlichen Z-förmige Querschnittsausbildung haben kann, so daß in der Zeichnung eine linke obere und rechte untere freie Anschlagfläche 26 bzw. 27 gebildet sind, welche mit gegenüberliegenden Schulterflächen 4 und 28 am Gehäuse 1 bzw. Hauptdichtungselement 21 in Eingriff treten können, um die axiale Bewegung des Kraftübertragungselementes 23 in die eine oder andere Richtung zu begrenzen. Unter normalen Betriebsbedingungen stehen die Anschlagflächen 26, 27 des Kraftübertragungselementes 23 in einem geeigneten auf den gewünschten Federweg des jeweiligen Elementes 22 bzw. 24 abgestimmten Abstand von den betreffenden Schulterflächen 4, 28 des Gehäuses 1 bzw. Hauptdichtungselementes 21. Hierdurch wird eine über den elastischen Bereich hinausgehende Belastung des Vorspannelementes 22 bzw. Sekundärdichtungselementes 24 vermieden, wie sie insbesondere bei einer hydraulischen Drucküberprüfung des Kugelhahnes mit einem Vielfachen des Nenndruckes auftreten kann.

Da die zwischen dem Gehäuse 1 und dem Kraftübertragungselement 23 einerseits und dem Hauptdichtungselement 21 und dem Kraftübertragungselement 23 andererseits gebildeten Funktionsspalte durch das Vorspannelement 22 bzw. Sekundärdichtungselement 24 nach außen im wesentlichen abgeschirmt sind, besteht nicht die Gefahr, daß sie durch eingedrungene Fremdkörper zugesetzt werden, wodurch die Funktion der Dichtungsanordnung beeinträchtigt werden könnte.

Obschon die Erfindung vorausgehend anhand einer bevorzugten Ausführungsform beschrieben wurde, versteht es sich, daß sie hierauf nicht beschränkt ist. Insbesondere ist die Erfindung nicht auf Kugelhähne mit positiv gelagerter Kugel beschränkt. Vielmehr kann anstelle davon auch eine schwimmend gelagerte Kugel vorgesehen werden, bei der die Kugel in Schließstellung durch die abstromseitige Dichtungsanordnung abgestützt ist. Durch entsprechende Dimensionierung der hydraulischen Flächen der an- und abstromseitigen Dichtungsanordnungen kann ferner erreicht werden, daß bei einem durch Leckage des abzudichtenden Mediums längs der Dichtungsanordnungen oder der Kugel aufgebautem Druck in einem Totraum oberhalb der Kugel eine automatische Druckentlastung eintritt, indem das Hauptdichtungselement einer der Dichtungsanordnungen unter dem Druck im Totraum gegen die Kraft des Vorspannelementes aus der dichtenden Eingriffnahme mit der Kugel wegbewegt wird, so daß eine Verbindung zwischen dem Totraum und der Durchgangspassage zustandekommt.

## Patentansprüche

1. Kugelhahn mit einem eine Durchgangspassage aufweisenden Gehäuse mit einer darin drehbar gehaltenen durchbohrten Kugel zum Öffnen und Schließen der Durchgangspassage und mit an- und abstromseitig der Kugel vorgesehenen Dichtungsanordnungen zur Abdichtung der Kugel gegenüber dem Gehäuse, von denen wenigstens eine ein gegen die Kugel durch ein am Gehäuse abgestütztes Vorspannelement vorgespanntes und gegenüber dem Gehäuse durch ein Sekundärdichtungselement abgedichtetes Hauptdichtungselement umfaßt, dadurch gekennzeichnet, daß das Vorspannelement (22) und das im Kraftfluß zwischen dem Vorspannelement und dem Hauptdichtungselement (21) angeordnete Sekundärdichtungselement (24) so ausgelegt sind, daß das Sekundärdichtungselement unter der einwirkenden Vorspannkraft um einen größeren Betrag als das Vorspannelement verformbar ist, und daß das Vorspann- und Sekundärdichtungselement aus einem Kohlenstoffmaterial mit Federeigenschaft bestehen.

2. Kugelhahn nach Anspruch 1, dadurch gekennzeichnet, daß das Vorspann- und Sekundärdichtungselement (22,24) im wesentlichen aus verpreßtem Graphitmaterial bestehen.

3. Kugelhahn nach Anspruch 1 oder 2, dadurch gekennzeichnet, daß das Vorspannelement (22) in Bezug auf die Wirkrichtung der Vorspannkraft eine größere Querschnittsabmessung als das Sekundärdichtungselement (24) hat.

4. Kugelhahn nach Anspruch 1, 2 oder 3, dadurch gekennzeichnet, daß die Federwege des Vorspann- und Sekundärdichtungselementes (22,24) anschlagbegrenzt sind.

5. Kugelhahn nach einem der vorhergehenden Ansprüche, dadurch gekennzeichnet, daß zwischen Vorspann- und Sekundärdichtungselement (22,24) ein Kraftübertragungselement (23) angeordnet ist.

6. Kugelhahn nach Anspruch 5, dadurch gekennzeichnet, daß an entgegengesetzten Bereichen des Kraftübertragungselementes (23) ein Paar mit gegenüberliegenden Schulterflächen (4,28) des Hauptdichtungselementes (21) bzw. Gehäuses (1) in Eingriff bringbare Anschlagflächen (26,27) vorgesehen sind, welche unter normalen Betriebsbedingungen in einem auf den maximal zulässigen Federweg des Vorspann- bzw. Sekundärdichtungselementes (22,24) abgestimmten Abstand von den Schulterflächen gehalten sind.

7. Kugelhahn nach einem der vorhergehenden Ansprüche mit einer im Gehäuse positiv oder schwimmend gelagerten Kugel, dadurch gekennzeichnet, daß die an- und abstromseitigen Dichtungsanordnungen gleichartig ausgebildet sind.

8. Kugelhahn nach einem der vorhergehenden Ansprüch, dadurch gekennzeichnet, daß das Hauptdichtungselement (21) aus einem metallischen Material gebildet ist und in dichtender Metall-auf-Metallberührung mit der Kugel (10) steht.

9. Dichtungsanordnung mit einem vorspannbaren metallischen Hauptdichtungselement und einem davon gehaltenen Sekundärdichtungslement, dadurch gekennzeichnet, daß ein die Vorspannkraft aufbringendes Vorspannelement (22) und das im Kraftfluß zwischen dem Vorspannelement und dem Hauptdichtungselement (21) angeordnete Sekundärdichtungselement (24) so dimensioniert sind, daß das Sekundärdichtungselement unter einer einwirkenden Vorspannkraft um einen größeren Betrag als das Vorspannelement verformbar ist, und daß das Vorspann- und Sekundärdichtungselement aus einem verpreßten Graphitmaterial mit Federeigenschaft bestehen.

## Claims

1. Ball valve having a housing comprising a through-going passage, the housing having a through-bored ball rotatably held therein for the purpose of opening and closing the through-going passage, and furthermore having sealing arrangements provided at the inlet and outlet side of the ball for the purpose of sealing the ball with respect to the housing, wherein and at least one of the sealing arrangements encompasses a main sealing element which is prestressed against the ball by a prestressing element supported on the housing and the main sealing element is sealed with respect to the housing by virtue of a secondary sealing element, characterised in that the prestressing element (22) and the secondary sealing element (24) disposed in the force flow between the prestressing element and the main sealing element (21) are designed in such a way that the secondary sealing element can be reshaped under the influencing prestressing force by a greater amount than the prestressing element and that the prestressing element and the secondary sealing element comprise a carbon material having resilient properties.

2. Ball valve according to claim 1 characterised in that the prestressing element (22) and the secondary sealing element (24) comprise substantially a compressed graphite material.

3. Ball valve according to claim 1 or 2, characterised in that with respect to the effective direction of the prestressing force the prestressing element (22) has a greater cross section dimension than the secondary sealing element (24).

4. Ball valve according to claim 1, 2 or 3, characterised in that the resilient travel of the prestressing element (22) and of the secondary sealing element (24) is defined by a stop.

5. Ball valve according to one of the aforementioned claims, characterised in that a force transmitting element (23) is disposed between the prestressing element (22) and the secondary sealing element (24).

6. Ball valve according to claim 5, characterised in that a pair of stop surfaces (26,27) are provided at the opposite lying regions of the force transmission element (23) and it is possible for this pair of stop surfaces (26,27) to be brought into engagement with the opposite lying shoulder surfaces (4,28) of the main sealing element (21) or housing (1), these stop surfaces (26,27) being held under normal operating conditions at a distance from the shoulder surfaces, this distance corresponding to the maximum permissible resilient travel of the prestressing element (22) and the secondary sealing element (24).

7. Ball valve according to one of the aforementioned claims having a ball mounted in a positive or floating manner in the housing, characterised in that the sealing arrangements at the inlet side and at the outlet side are identical.

8. Ball valve according to one of the aforementioned claims, characterised in that the main sealing element (21) is formed from a metallic material and is in metal-to-metal contact with the ball (10) in a sealing manner.

9. Sealing arrangement having a metallic main sealing element which can be prestressed and a secondary sealing element held by the main sealing element, characterised in that a prestressing element (22) which produces the prestressing force and the secondary sealing element (24) disposed in the force flow between the prestressing element and the main sealing element (21) are dimensioned such that the secondary sealing element can be reshaped under an influencing prestressing force by a greater amount than the prestressing element and that the prestressing element and the secondary sealing element comprise a compressed graphite material having resilient properties.

## Revendications

1. Robinet à bille avec un corps présentant un orifice de passage, avec une bille forée de part en part montée à pivot à l'intérieur de celui-ci pour ouvrir et fermer l'orifice de passage et avec des dispositifs d'étanchéité prévus en amont et en aval de la bille pour rendre la bille étanche par rapport au corps, dont l'un au moins comprend un élément d'étanchéité principal précontraint contre la bille par un élément de précontrainte prenant appui sur le corps et rendu étanche par rapport au corps par un élément d'étanchéité secondaire, caractérisé en ce que l'élément de précontrainte (22) et l'élément d'étanchéité secondaire (24) disposé mécaniquement entre l'élément de précontrainte et l'élément d'étanchéité principal (21) est conçu de façon que l'élément d'étanchéité secondaire puisse être déformé sous l'effet de la force de précontrainte dans une mesure plus grande que l'élément de précontrainte et que l'élément de précontrainte et l'élément d'étanchéité secondaire sont constitués d'un matériau à base de carbone ayant des caractéristiques élastiques.

2. Robinet à bille selon la revendication 1, caractérisé en ce que l'élément de précontrainte et l'élément d'étanchéité secondaire (22, 24) sont constitués essentiellement de graphite comprimé.

3. Robinet à bille selon la revendication 1 ou 2, caractérisé en ce que l'élément de précontrainte (22) présente une section de plus grande dimension que l'élément d'étanchéité secondaire (24) par rapport au sens d'action de la force de précontrainte.

4. Robinet à bille selon la revendication 1, 2 ou 3, caractérisé en ce que le déplacement élastique de l'élément de précontrainte et de l'élément d'étanchéité secondaire (22, 24) est limité par une butée.

5. Robinet à bille selon l'une des revendications précédentes, caractérisé en ce qu'un élément de transmission de force (23) est disposé entre l'élément de précontrainte (22) et l'élément d'étanchéité secondaire (24).

6. Robinet à bille selon la revendication 5, caractérisé en ce que, dans les zones opposées de l'élément de transmission de force (23), il est prévu une paire de faces de butées (26, 27) pouvant agir sur des surfaces d'épaulement opposées (4, 28) de l'élément d'étanchéité principal (21) ou du corps (1) qui sont maintenues, dans des conditions de fonctionnement normales, à une distance des surfaces d'épaulement adaptées au déplacement élastique maximal admissible de l'élément de précontrainte (22) ou de l'élément d'étanchéité secondaire (24).

7. Robinet à bille selon l'une des revendications précédentes, avec une bille maintenue positivement dans le corps ou un montage flottant, caractérisé en ce que les dispositifs d'étanchéité situés en amont et en aval sont de disposition semblable.

8. Robinet à bille selon l'une des revendications précédentes, caractérisé en ce que l'élément d'étanchéité principal (21) est formé d'un matériau métallique et est en contact de type métal-métal assurant l'étanchéité avec la bille (10).

9. Dispositif d'étanchéité avec un élément d'étanchéité principal métallique pouvant être précontraint et un élément d'étanchéité secondaire maintenu par celui-ci, caractérisé en ce qu'un élément de précontrainte (22) appliquant la force de précontrainte et un élément d'étanchéité secondaire (24) disposé mécaniquement entre l'élément de précontrainte et l'élément d'étanchéité principal (21) sont dimensionnés de façon que l'élément d'étanchéité secondaire puisse être déformé sous l'effet d'une force de précontrainte dans une plus grande mesure que l'élément de précontrainte et que l'élément de précontrainte et l'élément d'étanchéité secondaire sont constitués de graphite comprimé ayant des caractéristiques élastiques.
